# EUROPÄISCHE PATENTSCHRIFT

(11) **EP 2 201 268 B1**
(45) Veröffentlichungstag und Bekanntmachung des Hinweises auf die Patenterteilung: **09.03.2011**
(21) Anmeldenummer: 08841249.9
(22) Anmeldetag: 13.10.2008
(51) Int. Cl.: F16H 57/04

(54) **ÖLVERSORGUNGSEINRICHTUNG EINES SCHALTGETRIEBES**
OIL SUPPLY DEVICE OF A MANUAL TRANSMISSION
DISPOSITIF D'ALIMENTATION EN HUILE D'UNE BOÎTE DE VITESSES

(30) Priorität: 25.10.2007 DE 102007051016
(43) Veröffentlichungstag der Anmeldung: 30.06.2010
(73) Patentinhaber: ZF Friedrichshafen AG, 88038 Friedrichshafen (DE)
(72) Erfinder: BEER, Uwe, 14476 Fahrland (DE); DRABEK, Michael, 14776 Brandenburg (DE); KLOSE, Harald, 14774 Brandenburg/Havel (DE)
(74) Vertreter: Paul, Andreas
(86) Internationale Anmeldenummer: PCT/EP2008/063702
(87) Internationale Veröffentlichungsnummer: WO 2009/053265

(56) Entgegenhaltungen:
- WO-A-02/04841
- DE-A1- 2 256 464
- DE-A1- 3 120 394
- DE-A1- 4 017 142
- DE-A1- 10 042 749
- DE-A1- 10 051 356
- DE-A1- 10 318 070
- DE-A1-102005 013 657
- US-A- 2 761 388
- US-A- 4 501 172
- US-A- 4 844 202
- US-B1- 6 206 140

## Beschreibung

Die Erfindung betrifft eine Ölversorgungseinrichtung eines Schaltgetriebes, das mindestens zwei achsparallele Getriebewellen aufweist, die selektiv über mehrere jeweils ein Festrad und ein Losrad umfassende Gangradsätze mit unterschiedlicher Übersetzung mittels den Losrädern zugeordneten Gangkupplungen miteinander in Triebverbindung bringbar sind, mit einer Ölpumpe, mittels der Getriebeöl aus einem Vorratsbehälter in eine Hauptdruckleitung förderbar ist, und mit mindestens einer an die Hauptdruckleitung angeschlossenen Verteilerleitung, mittels der Getriebeöl an mehrere, jeweils auf eine schmier- und/oder kühlungsrelevante Stelle eines Getriebebauteils gerichtete Spritzdüsen leitbar ist.

Ein Schaltgetriebe eines Kraftfahrzeugs weist üblicherweise mindestens zwei achsparallele Getriebewellen auf, die selektiv über mehrere Gangradsätze mit unterschiedlicher Übersetzung miteinander in Triebverbindung bringbar sind. Die Gangradsätze umfassen jeweils mindestens ein auf einer der beiden Getriebewellen drehfest angeordnetes Festrad und ein auf der anderen der beiden Getriebewellen drehbar gelagertes Losrad. Das Losrad steht bevorzugt durch einen unmittelbaren Verzahnungseingriff mit dem Festrad in Triebverbindung und ist mittels einer zugeordneten Gangkupplung mit der betreffenden Getriebewelle drehfest verbindbar. Durch das Einrücken einer Gangkupplung wird somit das Losrad des betreffenden Gangradsatzes mit der zugeordneten Getriebewelle drehfest verbunden und damit der betreffende Gang getriebeintern eingelegt. Durch das Ausrücken der Gangkupplung wird die drehfeste Verbindung des Losrades mit der zugeordneten Getriebewelle wieder gelöst und damit der betreffende Gang getriebeintern ausgelegt. Üblicherweise sind die Losräder von zwei benachbarten Gangradsätzen jeweils auf einer gemeinsamen Getriebewelle angeordnet. Die zugeordneten, wahlweise als sperrsynchronisierte oder unsynchronisierte Klauenkupplungen ausgebildeten Gangkupplungen sind in diesem Fall bevorzugt paarweise in einem Schaltpaket zusammengefasst und jeweils in entgegengesetzter Betätigungsrichtung über eine gemeinsame, drehfest und axial verschiebbar auf der betreffenden Getriebewelle angeordnete Schaltmuffe ein- und ausrückbar.

Um einen möglichst widerstands- und verschleißarmen Betrieb zu gewährleisten, weisen bekannte Schaltgetriebe jeweils eine Ölversorgungseinrichtung auf, mittels der ein allgemein als Getriebeöl bezeichnetes Schmier- und Kühlmittel aus einem Vorratsbehälter (Ölsumpf) aufgenommen und zu schmier- und/oder kühlungsrelevanten Stellen von Getriebebauteilen, wie Zahneingriffe von Zahnradpaaren, Lager von Getriebewellen und Losrädern, Schaltmuffen, Reibsynchronisierelemente und Gangkupplungen, gefördert wird.

In einfachster Bauart kann eine Ölversorgungseinrichtung eines Schaltgetriebes bekanntlich als Schleuderölvorrichtung ausgebildet sein, bei der ein mit der Getriebeeingangswelle oder der Getriebeausgangswelle dauerhaft in Triebverbindung stehendes Getriebezahnrad in das im Ölsumpf befindliche Getriebeöl eintaucht und dieses bei einer Drehung mit seinen Zähnen aufnimmt und fliehkraftbedingt innerhalb des Getriebegehäuses abschleudert und somit verteilt. Die wesentlichen Nachteile an dieser Bauart einer Ölversorgungseinrichtung bestehen in der drehzahlabhängigen Fördermenge und Verteilung des Getriebeöls sowie in der weitgehend ungezielten Verteilung des Getriebeöls, welches entweder einen sehr hohen Fördervolumenstrom erfordert oder zu einer unzureichenden Versorgung von kritischen schmier- und kühlungsrelevanten Stellen führen kann.

Da die spezifische Belastung wesentlicher Getriebebauteile aufgrund stetig ansteigender Drehmomente der Antriebsmotoren und zugleich der zunehmenden Anzahl der Gänge bei nahezu gleichbleibenden Getriebeabmessungen weiter ansteigt, reicht eine als Schleuderölvorrichtung ausgebildete Ölversorgungseinrichtung für eine ausreichende Schmierung und Kühlung der betreffenden Getriebebauteile vielfach nicht mehr aus. Zur gezielten Zuführung von Getriebeöl an schmierungs- und kühlungsrelevante Stellen von Getriebebauteilen sind daher als Spritzölvorrichtung ausgebildete Ölsversorgungseinrichtungen entwickelt worden, die jeweils eine Ölpumpe aufweisen, mittels der Getriebeöl aus einem Vorratsbehälter in eine Hauptdruckleitung förderbar ist, und die mit mindestens einer an die Hauptdruckleitung angeschlossenen Verteilerleitung versehen sind, mittels der Getriebeöl an mehrere, jeweils auf eine schmier- und/oder kühlungsrelevante Stelle eines Getriebebauteils gerichtete Spritzdüsen leitbar ist.

Aus der gattungsgemäßen DE 31 20 394 C2 ist beispielsweise eine derartige, als Spritzölvorrichtung ausgebildete Ölversorgungseinrichtung eines Zahnradgetriebes bekannt, bei der eine mit der Getriebeeingangswelle in Triebverbindung stehende Ölpumpe Getriebeöl aus einem Ölsumpf ansaugt und über eine Hauptdruckleitung in eine als Sprührohr ausgebildete Verteilerleitung fördert. Das Sprührohr ist quer zu den Zahnradpaaren einer Eingangskonstante und mehrerer Gangzahnräder über deren Zahneingriffe geführt und mit auf die Zahneingriffe gerichteten Spritzöffnungen versehen. Zur Reduzierung des Ölstands des Ölsumpfes und der durch das Eintauchen von Zahnrädern in das Getriebeöl des Ölsumpfes bedingten Panschverluste weist das Zahnradgetriebe zwei jeweils durch eine Zwischenwand von dem Ölsumpf getrennte Speicherkammern auf, die über jeweils ein an das Sprührohr angeschlossenes und mit einem selbsttätig bei Überdruck öffnenden Ventil oder zumindest mit einer Drosselstelle versehenen Speiseleitung befüllt und über jeweils eine gedrosselte Rücklauföffnung in der jeweiligen Zwischenwand in den Ölsumpf entleert werden. Durch die Anordnung der Ventile oder Drosselstellen in den Speiseleitungen wird sichergestellt, dass die Zahneingriffe der Zahnräder ausreichend mit Getriebeöl versorgt werden, und dass nur überschüssiges Getriebeöl in die Speicherkammern gefördert wird. Andere schmierungs- und kühlungsrelevante Getriebebauteile, wie Lager von Getriebewellen und Losrädern, Schaltmuffen, Reibsynchronisierelemente, und Gangkupplungen, werden jedoch nicht gezielt mit Getriebeöl versorgt.

Dagegen ist in der DE 103 18 070 A1 eine als Spritzölvorrichtung ausgebildete Ölsversorgungseinrichtung beschrieben, bei der eine stufenweise Versorgung unterschiedlicher schmierungs- und kühlungsrelevanter Stellen bzw. Getriebebauteile mit Getriebeöl vorgesehen ist. An eine von der Ölpumpe mit Getriebeöl versorgte Zuführungsleitung (Hauptdruckleitung) sind zwei Verteilerleitungen angeschlossen; eine erste Verteilerleitung, die mehrere Spritzdüsen zur Versorgung von Stellen höherer erster Priorität, wie Zahneingriffe von hoch belasteten Gangzahnrädern, aufweist, und eine zweite Verteilerleitung, die mit mehreren Spritzdüsen zur Versorgung von Stellen niedrigerer zweiter Priorität, wie Zahneingriffe von niedrig belasteten Gangzahnrädern und Schaltmuffen, versehen ist. Während die erste Verteilerleitung permanent mit der Zuführungsleitung verbunden ist, steht die zweite Verteilerleitung mit der Zuführungsleitung über ein Steuerventil in Verbindung, das bei niedrigem Volumenstrom in der Zuführungsleitung geschlossen ist und bei ansteigendem Volumenstrom mit Erreichen eines bestimmten Staudruckes öffnet. Bei weiter ansteigendem Volumenstrom in der Zuführungsleitung wird mit Erreichen eines erhöhten Staudruckes an dem Steuerventil ein Bypass geöffnet, über den Getriebeöl unmittelbar zurück in den Ölsumpf geführt wird. Die schmierungs- und kühlungsrelevanten Stellen erster Priorität werden somit permanent mit Getriebeöl versorgt, wogegen die schmierungs- und kühlungsrelevanten Stellen zweiter Priorität erst ab einem höheren Fördervolumenstrom durch eine Beaufschlagung mit Getriebeöl gezielt geschmiert und gekühlt werden. Aufgrund einer möglichen Unterversorgung mit Schmier- und Kühlöl kann es daher zu einem vorzeitigen Verschleiß der betreffenden Getriebebauteile zweiter Priorität kommen.

In einer weiteren, aus der DE 10 2005 013 657 A1 bekannten Ölversorgungseinrichtung eines Zahnradgetriebes, die eine Schleuderölvorrichtung und eine Spritzölvorrichtung umfasst, ist dagegen eine belastungsabhängige Steuerung der Ölversorgung der schmierungs- und kühlungsrelevanten Stellen bzw. Getriebebauteile vorgesehen. Hierzu weist die Ölversorgungseinrichtung ein Ölsteuergerät auf, das zur Ermittlung des Belastungszustands des Zahnradgetriebes mit mindestens einem Getriebesensor und zur Steuerung des Fördervolumenstroms und des Förderdruckes mit einem zum Antrieb der Ölpumpe vorgesehenen steuerbaren Elektromotor in Verbindung steht. Die auf unterschiedliche schmierungs- und kühlungsrelevante Stellen bzw. Getriebebauteile gerichteten Spritzdüsen sind mit Rückschlagventilen mit unterschiedlichen Öffnungsdrücken und/oder mit von dem Ölsteuergerät ansteuerbaren Magnetventilen versehen, so dass durch eine entsprechende Ansteuerung des Elektromotors und/oder der Magnetventile eine stufenweise oder sogar individuelle belastungsabhängige Ölversorgung der schmierungs- und kühlungsrelevanten Stellen bzw. Getriebebauteile möglich ist. Hierdurch ist zwar eine optimale Schmierung und Kühlung der kritischen Getriebebauteile bei relativ geringem Fördervolumenstrom möglich. Der steuerungstechnische Aufwand dieser bekannten Ölversorgungseinrichtung ist jedoch ungünstig hoch und birgt das Risiko von Störungen und Fehlfunktionen.

Außerdem ist aus der DE 2 256 464 A1 eine Kühlölversorgungseinrichtung zur Kühlung der Reibelemente einer Schaltkupplung eines Wendegetriebes bekannt, die aufgrund veränderlicher Schaltdrehzahlen stark wechselnden Belastungen ausgesetzt sind. Diese Kühlölversorgungseinrichtung ist insbesondere dadurch gekennzeichnet, dass der Ölstrom aus zwei Teilströmen gebildet ist, von denen der eine Teilölstrom drehzahlabhängig gesteuert ist und der andere Teilölstrom einen konstanten Wert hat, wobei durch entsprechende Bemessung der Teilölströme eine optimale Anpassung an die zu erwartende Schaltarbeit bei gleichzeitig kleinstmöglicher Fördermenge der Pumpe erreicht wird. Gemäß einem Ausführungsbeispiel erfolgt die Zuführung des aus den beiden Teilölströmen kombinierten Ölstroms zu einer Schaltkupplung entsprechend der dortigen einzigen Zeichnungsfigur über eine gesonderte Leitung bis unmittelbar radial unterhalb des drehbaren Innenlamellenträgers der als Lamellenkupplung ausgebildeten Schaltkupplung, wobei das Kühlöl diese Leitung durch eine zur radialen Innenseite des Innenlamellenträgers gerichtete Spritzdüse verlässt. Von dort gelangt das Kühlöl durch radiale Bohrungen im Innenlamellenträger zu den Lamellen der Lamellenkupplung. Der drehzahlabhängig geregelte zweite Ölstrom wird zudem über eine gesonderte Leitung zu Radsätzen bzw. Lager des Getriebes geleitet.

Schließlich ist es aus der DE 40 17 142 A1 bekannt, zur Kühl- und Schmierölversorgung eines Schaltgetriebes ein Schmiermittel durch eine in eine Getriebewelle eingebrachte Längsbohrung und radiale Stichbohrungen zu Losrädern und Schiebemuffen des Getriebes zu leiten.

Die meisten der vorgenannten Ölversorgungseinrichtungen weisen den Nachteil auf, dass schmierungs- und kühlungsrelevante Getriebebauteile, die jeweils eine zugeordnete Getriebewelle ringförmig umgeben, wie die Lager von Getriebewellen und Losrädern, Schaltmuffen, Reibsynchronisierelemente und Gangkupplungen, nur von außen mit z.B. von rotierenden Zahnrädern abgeschleudertem oder durch Spritzdüsen zugeführtem Getriebeöl versorgt werden, was aufgrund einer begrenzten Eindringtiefe für eine vollständige Schmierung und Kühlung unzureichend sein kann und zu einem vorzeitigen Verschleiß der betreffenden Getriebebauteile führen kann.

Aufgrund der vorbeschriebenen Nachteile der bekannten Ölversorgungseinrichtungen liegt der vorliegenden Erfindung die Aufgabe zugrunde, eine möglichst einfach und kostengünstig aufgebaute Ölversorgungseinrichtung der eingangs genannten Art vorzuschlagen, mit der eine hinreichende Ölversorgung aller schmierungs- und kühlungsbedürftigen Stellen von Getriebebauteilen unterschiedlicher Priorität erzielbar ist.

Diese Aufgabe wird durch eine Ölversorgungseinrichtung mit den Merkmalen des Hauptanspruchs gelöst.

Demnach geht die Erfindung aus von einer Ölversorgungseinrichtung eines Schaltgetriebes, das mindestens zwei achsparallele Getriebewellen aufweist, die selektiv über mehrere jeweils ein Festrad und ein Losrad umfassende Gangradsätze mit unterschiedlicher Übersetzung mittels den Losrädern zugeordneten Gangkupplungen miteinander in Triebverbindung bringbar sind, mit einer Ölpumpe, mittels der Getriebeöl aus einem Vorratsbehälter in eine Hauptdruckleitung förderbar ist, und mit mindestens einer an die Hauptdruckleitung angeschlossenen Verteilerleitung, über die Getriebeöl an mehrere, jeweils auf eine schmier- und/oder kühlungsrelevante Stelle eines Getriebebauteils gerichtete Spritzdüsen leitbar ist. Außerdem ist vorgesehen, dass mindestens eine weitere Verteilerleitung an die Hauptdruckleitung angeschlossen ist, dass die weitere Verteilerleitung als eine in einer Getriebewelle angeordnete axiale Zentralbohrung ausgebildet ist, von der mindestens eine Radialbohrung zu einem die Getriebewelle ringförmig umgebenden schmierungs- und/oder kühlungsrelevanten Getriebebauteil führt, und dass die weitere Verteilerleitung über ein Volumenstromregelventil mit der Hauptdruckleitung in Verbindung steht, mittels dem der in die weitere Verteilerleitung geleitete Ölvolumenstrom unabhängig von dem Fördervolumenstrom und dem Förderdruck der Ölpumpe weitgehend konstant haltbar ist.

Vorteilhafte Weiterbildungen und Ausgestaltungen der erfindungsgemäβen Ölversorgungseinrichtung sind Gegenstand der Unteransprüche.

Die Erfindung geht demnach aus von einer Ölversorgungseinrichtung eines Schaltgetriebes, das mindestens zwei achsparallele Getriebewellen aufweist, die selektiv über mehrere jeweils ein Festrad und ein Losrad umfassende Gangradsätze mit unterschiedlicher Übersetzung mittels den Losrädern zugeordneten Gangkupplungen miteinander in Triebverbindung bringbar sind. Die Ölversorgungseinrichtung ist mit einer Ölpumpe versehen, mittels der Getriebeöl aus einem Vorratsbehälter in eine Hauptdruckleitung förderbar ist. An die Hauptdruckleitung ist mindestens eine Verteilerleitung angeschlossen, über die Getriebeöl an mehrere, jeweils auf eine schmier- und/oder kühlungsrelevante Stelle eines Getriebebauteils gerichtete Spritzdüsen leitbar ist. Die Ölversorgungseinrichtung, von der die Erfindung ausgeht, ist somit in an sich bekannter Weise zunächst als Spritzölvorrichtung ausgebildet.

Da die Ölversorgungseinrichtung in der Ausgangsausführung alle vorhandenen schmier- und/oder kühlungsrelevanter Stellen bzw. Getriebebauteile unabhängig von ihrem Ölbedarf gleichermaßen über Spritzdüsen mit Getriebeöl versorgt, ist für eine ausreichende Ölversorgung kritischer schmier- und/oder kühlungsrelevanter Stellen bzw. Getriebebauteile, wie insbesondere der Zahneingriffe der jeweils lastführenden Zahnradpaare, ein relativ hoher Fördervolumenstrom der Ölpumpe erforderlich, was zu einer entsprechend hohen, den Wirkungsgrad des Schaltgetriebes verschlechternden Antriebsleistung der Ölpumpe führt. Zudem führt eine Überversorgung bestimmter Getriebebauteile, insbesondere der Lager von Getriebewellen und Losrädern, zu einem erhöhten Schleppmoment, wodurch der Wirkungsgrad des Schaltgetriebes ebenfalls verschlechtert wird. Andererseits kann es bei einer Unterversorgung von Schmier- und Kühlstellen unterschiedlicher Versorgungspriorität zu einem vorzeitigen Verschleiß der betreffenden Getriebebauteile und damit zu einem frühzeitigen Ausfall des Schaltgetriebes kommen.

Daher weist die Ölversorgungseinrichtung gemäß der Erfindung zusätzlich zu der mindestens einen Verteilerleitung der Spritzölvorrichtung mindestens eine weitere, an die Hauptdruckleitung angeschlossene Verteilerleitung auf, die zumindest abschnittsweise als eine in einer Getriebewelle angeordnete axiale Zentralbohrung ausgebildet ist. Von dieser zusätzlichen Verteilerleitung führen zumeist mehrere Radialbohrungen zu zumindest einigen die Getriebewelle ringförmig umgebenden schmierungs- und/oder kühlungsrelevanten Getriebebauteilen, wie Lager der betreffenden Getriebewelle und/oder auf der Getriebewelle angeordneten Losrädern und/oder auf der Getriebewelle angeordneten Schaltmuffen, Reibsynchronisierelementen und Gangkupplung. Die betreffenden Getriebebauteile, die einen permanenten, jedoch relativ geringen Ölbedarf haben, werden durch die zentrale Zuführung optimal mit Schmier- und Kühlöl versorgt. Aufgrund der optimalen Zuführung ist der erforderliche Ölvolumenstrom deutlich kleiner als bei einer radial äußeren Ölzuführung durch eine Spritzölvorrichtung oder eine Schleuderölvorrichtung.

Demzufolge ist eine derartige, als Zentralbohrung ausgebildete Verteilerleitung bevorzugt in einer von dem Ölsumpf entfernten Getriebewelle angeordnet, und von dieser Verteilerleitung führt mindestens eine Radialbohrung zu einem Lager der betreffenden Getriebewelle.

Ebenso ist eine derartige, als Zentralbohrung ausgebildete Verteilerleitung bevorzugt in einer mehrere Losräder tragenden Getriebewelle angeordnet, und von dieser Verteilerleitung führt mindestens eine Radialbohrung zu einem Lager und/oder einer Schaltmuffe und/oder einem Reibsynchronisierelement und/oder einer Gangkupplung eines der betreffenden Losräder.

Um einerseits eine minimale Ölversorgung der die Getriebewelle ringförmig umgebenden Getriebebauteile zu gewährleisten und andererseits einen zu großen Ölvolumenstrom zu diesen Getriebebauteilen sowie eine mögliche Unterversorgung der über die Spritzdüsen versorgten Schmier- und Kühlstellen, wie insbesondere der Zahneingriffe der lastführenden Zahnradpaare, zu vermeiden, steht die weitere Verteilerleitung gemäß einem anderen Merkmal der Erfindung über ein Volumenstromregelventil mit der Hauptdruckleitung in Verbindung, mittels dem der in die weitere Verteilerleitung geleitete Ölvolumenstrom unabhängig von dem Fördervolumenstrom und dem Förderdruck der Ölpumpe weitgehend konstant haltbar ist. Somit wird von dem Fördervolumenstrom der Ölpumpe nur ein relativ kleiner, weitgehend konstanter Ölvolumenstrom für die Schmierung und Kühlung der die Getriebewelle ringförmig umgebenden Getriebebauteile entnommen. Der Rest des Fördervolumenstroms steht für die Versorgung der kritischen, über die Spritzdüsen der Spritzölvorrichtung mit Getriebeöl beaufschlagten Schmier- und Kühlstellen zur Verfügung.

Um diese Steuerungsfunktion selbsttätig, also ohne eine äußere Ansteuerung beispielsweise durch ein Steuergerät, erfüllen zu können, ist das Volumenstromregelventil bevorzugt als ein druckgesteuertes Proportionalventil mit einer mittels eines Steuerkolbens steuerbaren, die Hauptdruckleitung mit der weiteren Verteilerleitung verbindenden Durchflussöffnung ausgebildet. Dabei ist der Steuerkolben in einem die freie Durchflussöffnung vergrößerndem Sinn von einer Rückstellfeder und von dem in der weiteren Verteilerleitung herrschenden statischen Druck beaufschlagbar, sowie entgegengesetzt dazu in einem die Durchflussöffnung verengenden Sinn von dem in der Hauptdruckleitung herrschenden Gesamtdruck belastbar.

Zur Erzielung eines möglichst einfachen und kompakten Aufbaus des Volumenstromregelventils ist bevorzugt vorgesehen, dass der Steuerkolben des Volumenstromregelventils zylindrisch ausgebildet und axialbeweglich in einer zylindrischen Bohrung eines Ventilgehäuses geführt ist, dass der Steuerkolben mit einer ersten stirnseitigen Wiegefläche einen von dem Gesamtdruck der Hauptdruckleitung beaufschlagten ersten Druckraum begrenzt, dass der Steuerkolben mit einer axial gegenüberliegenden und von der Rückstellfeder belasteten zweiten stirnseitigen Wiegefläche einen von dem statischen Druck der weiteren Verteilerleitung beaufschlagten zweiten Druckraum begrenzt, wobei die steuerbare Durchflussöffnung durch eine in dem Zylindermantel des Steuerkolbens angeordnete Ringnut und eine radial benachbart in dem Ventilgehäuse angeordnete, mit der Hauptdruckleitung in Verbindung stehende Radialbohrung gebildet ist, dass in dem Steuerkolben mindestens eine Radialbohrung von der Ringnut in die Mitte des Steuerkolbens führt, von der eine erste axiale Zentralbohrung zu dem ersten Druckraum und eine zweite axiale Zentralbohrung zu dem zweiten Druckraum führt, und dass an den zweiten Druckraum mit der weiteren Verteilerleitung verbunden ist.

Damit in dem ersten Druckraum der volle Gesamtdruck der Hauptdruckleitung wirksam ist und dieser weitgehend ohne Auswirkung auf den zweiten Druckraum ist, weist die erste Zentralbohrung des Steuerkolbens einen gegenüber der zweiten Zentralbohrung deutlich größeren Durchmesser auf. Im Gegensatz zur ersten Zentralbohrung wirkt die zweite Zentralbohrung des Steuerkolbens somit als Drosselstelle.

Eine an den zweiten Druckraum des Volumenstromregelventils angeschlossene Verbindungsleitung steht mit der weiteren Verteilerleitung vorteilhaft über eine Drehdurchführung in Verbindung, da hierdurch eine die axiale Baulänge des Schaltgetriebes vergrößernde, an einem Ende der betreffenden Getriebewelle angeordnete Axialzuführung vermieden werden kann.

Die Drehdurchführung ist zweckmäßig aus einem die betreffende Getriebewelle radial umfassenden und abgedichteten Ringraum eines Gehäusebauteils sowie aus mindestens einer von dem Ringraum zu der axialen Zentralbohrung führenden Radialbohrung in der Getriebewelle gebildet.

Zur Verdeutlichung der Erfindung ist der Beschreibung eine Zeichnung mit Ausführungsbeispielen beigefügt. In dieser zeigt
- Fig. 1: den prinzipiellen Aufbau der erfindungsgemäßen Ölversor- gungseinrichtung anhand einer schematischen Darstellung,
- Fig. 2: eine beispielhafte Ausführung der erfindungsgemäßen Ölversor- gungseinrichtung innerhalb eines Schaltgetriebes mit einer be- vorzugten Ausführung eines Volumenstromregelventils, und
- Fig. 3: die Kennlinie des Volumenstromregelventils gemäß Fig. 2.

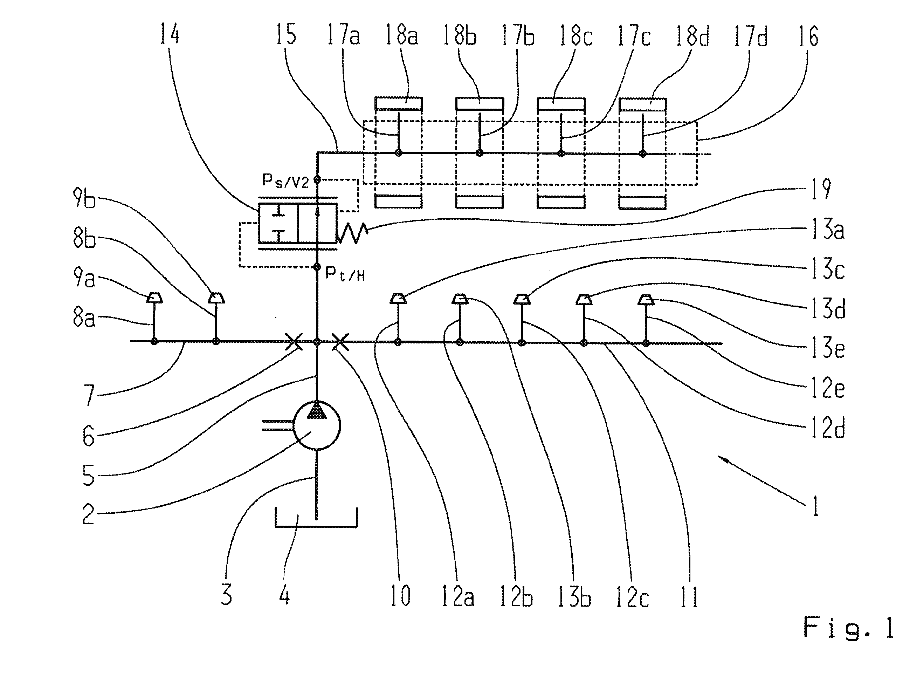

Eine in Fig. 1 in vereinfachter Form schematisch abgebildete erfindungsgemäße Ölversorgungseinrichtung 1 eines Schaltgetriebes weist eine während des Fahrbetriebs des betreffenden Kraftfahrzeugs antreibbare Ölpumpe 2 auf, mittels der Getriebeöl über eine Saugleitung 3 aus einem Vorratsbehälter 4 (Ölsumpf) in eine Hauptdruckleitung 5 förderbar ist. An die Hauptdruckleitung 5 sind über jeweils eine Drosselstelle 6, 10 zwei Verteilerleitungen 7, 11 angeschlossen, durch die Getriebeöl über zugeordnete Anschlussleitungen 8a, 8b; 12a bis 12e an mehrere, jeweils auf eine schmier- und/oder kühlungsrelevante Stelle eines Getriebebauteils gerichtete Spritzdüsen 9a, 9b; 13a bis 13e leitbar ist. Über diese Spritzölvorrichtung werden bevorzugt die Zahneingriffe von Zahnradpaaren des Schaltgetriebes von außen mit dem zugeführten Getriebeöl beaufschlagt und dadurch geschmiert sowie gekühlt.

Zusätzlich ist über ein Volumenstromregelventil 14 eine weitere Verteilerleitung 15 an die Hauptdruckleitung 5 angeschlossen. Die weitere Verteilerleitung 15 ist als eine in einer Getriebewelle 16 angeordnete axiale Zentralbohrung ausgebildet, von der mehrere Radialbohrungen 17a bis 17d zu jeweils einem die Getriebewelle 16 ringförmig umgebenden schmierungs- und/oder kühlungsrelevanten Getriebebauteil 18a bis 18d führen. Über diese Druckölvorrichtung werden bevorzugt die Lager der betreffenden Getriebewelle 16, die Lager der auf der Getriebewelle 16 drehbar gelagerten Losräder, sowie gegebenenfalls die den Losrädern zugeordneten Gangkupplungen, Reibsynchronisierelemente und Schaltmuffen mit dem zentral zugeführten Getriebeöl geschmiert und gekühlt.

Das Volumenstromregelventil 14 ist als ein druckgesteuertes Proportionalventil mit einer mittels eines Steuerkolbens 27 steuerbaren, die Hauptdruckleitung 5 mit der weiteren Verteilerleitung 15 verbindenden Durchflussöffnung ausgebildet, wobei der Steuerkolben 27 in einem die Durchflussöffnung erweiternden bzw. vergrößerndem Sinn von einer Rückstellfeder 19 und von dem in der weiteren Verteilerleitung 15 herrschenden statischen Druck p_{s/v2} beaufschlagbar ist, und bei dem dazu entgegengesetzt der Steuerkolben 27 in einem die Durchflussöffnung verengenden Sinn von dem in der Hauptdruckleitung 5 herrschenden Gesamtdruck p_{t/H} belastbar ist. Der in der Hauptdruckleitung 5 wirksame Gesamtdruck setzt sich bekanntlich additiv aus dem statischen Druck p_{s/H} und dem aus dem Aufstau des Fördervolumenstroms der Ölpumpe 2 resultierenden Staudruck p_{v/H} zusammen (p_{t/H} = p_{s/H} + p_{v/H}).

Durch das Volumenstromregelventil 14 wird der aus der Hauptdruckleitung 5 in die weitere Verteilerleitung 15 fließende Ölvolumenstrom weitgehend unabhängig von dem aktuellen Fördervolumenstrom und dem aktuellen Förderdruck der Ölpumpe 2 konstant gehalten. Hierdurch wird einerseits eine ausreichende Versorgung der an die weitere Verteilerleitung 15 angeschlossenen Stellen bzw. Getriebebauteile 18a bis 18d mit Getriebeöl sichergestellt. Andererseits wird damit zugleich verhindert, dass über die weitere Verteilerleitung 15 der Druckölvorrichtung zu viel Getriebeöl abfließt und damit an den schmierungs- und kühlungsrelevanten Stellen bzw. Bauteilen, die über die Verteilerleitungen 7, 11 der Spritzölvorrichtung versorgt werden und eine höhere Versorgungspriorität haben, eine Unterversorgung mit Getriebeöl auftritt.

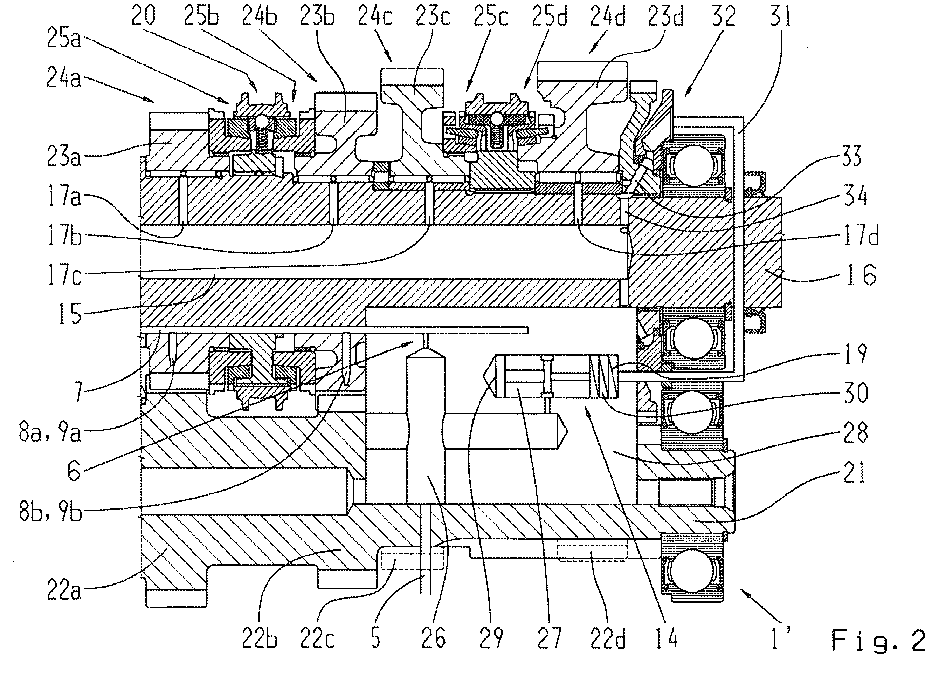

In Fig. 2 ist beispielhaft eine Ausführung der erfindungsgemäßen Ölversorgungseinrichtung 1' innerhalb eines Schaltgetriebes 20 dargestellt. Das Schaltgetriebe 20 weist zwei achsparallele Getriebewellen 16, 21 auf, die selektiv über mehrere jeweils ein Festrad 22a bis 22d und ein Losrad 23a bis 23d umfassende Gangradsätze 24a bis 24d mit unterschiedlicher Übersetzung mittels den Losrädern 23a bis 23d zugeordneten Gangkupplungen 25a bis 25d miteinander in Triebverbindung bringbar sind. Aufgrund prinzipiell identischer Funktionszusammenhänge werden nachfolgend für Bauteile, die mit den Bauteilen der Ölversorgungseinrichtung 1 nach Fig. 1 funktionsgleich sind, identische Bezugszeichen verwendet.

An die mit der Ölpumpe 2 in Verbindung stehende Hauptdruckleitung 5 ist zunächst ein Verteiler 26 angeschlossen, an den über eine Drosselstelle 6 eine Verteilerleitung 7 angeschlossen ist, von der mehrere, jeweils mit einer Spritzdüse 9a, 9b versehene Anschlussleitungen 8a, 8b ausgehen. Die Spritzdüsen 9a, 9b, von denen in der Abbildung von Fig. 2 aufgrund der ausschnittweisen Darstellung nur zwei sichtbar sind, sind auf die Zahneingriffe zugeordneter Zahnradpaare 22a, 23a; 22b, 23b gerichtet. Über diese Spritzölvorrichtung werden somit vorwiegend die Zahneingriffe von Zahnradpaaren des Schaltgetriebes 20 von außen mit Getriebeöl beaufschlagt und dadurch geschmiert und gekühlt.

Über ein Volumenstromregelventil 14 ist eine weitere Verteilerleitung 15 an den Verteiler 26 angeschlossen. Die als axiale Zentralbohrung ausgebildete weitere Verteilerleitung 15 ist in der Getriebewelle 16 angeordnet, auf der die Losräder 23a bis 23d der Gangradsätze 24a bis 24d angeordnet sind. Von der Zentralbohrung führt jeweils mindestens eine Radialbohrung 17a bis 17d zu den Wälzlagern, mittels denen die Losräder 23a bis 23d drehbar auf der Getriebewelle 16 gelagert sind. Somit werden über diese Druckölvorrichtung vorwiegend die Wälzlager der auf der Getriebewelle 16 drehbar gelagerten Losräder 23a bis 23d mit dem zentral zugeführten Getriebeöl geschmiert und gekühlt.

In einer in Fig. 2 abgebildeten bevorzugten Ausführungsform des Volumenstromregelventils 14 ist ein zugeordneter Steuerkolben 27 zylindrisch ausgebildet und axialbeweglich in einer zylindrischen Bohrung eines Ventilgehäuses 28 geführt. Mit einer ersten stirnseitigen Wiegefläche begrenzt der Steuerkolben 27 einen von dem Gesamtdruck p_{t/H} der Hauptdruckleitung 5 beaufschlagten ersten Druckraum 29. Mit einer axial gegenüberliegenden und von einer Rückstellfeder 19 belasteten zweiten stirnseitigen Wiegefläche begrenzt der Steuerkolben 27 einen von dem statischen Druck p_{s/V2} der weiteren Verteilerleitung 15 beaufschlagten zweiten Druckraum 30.

Eine in dem Zylindermantel des Steuerkolbens 27 angeordnete Ringnut und eine radial benachbart in dem Ventilgehäuse 28 angeordnete, mit dem Verteiler 26 in Verbindung stehende Radialbohrung bilden eine über eine Axialverschiebung des Steuerkolbens 27 steuerbare Durchflussöffnung. Mehrere Radialbohrungen führen von der Ringnut in die Mitte des Steuerkolbens 27, von der aus eine erste axiale Zentralbohrung zu dem ersten Druckraum 29 und eine zweite axiale Zentralbohrung zu dem zweiten Druckraum 30 führt.

Damit der in der Hauptdruckleitung 5 und in dem Verteiler 26 wirksame Gesamtdruck p_{t/H} auch in dem ersten Druckraum 29, nicht jedoch vollständig in dem zweiten Druckraum 30 wirksam ist, weist die erste Zentralbohrung des Steuerkolbens 27 einen gegenüber der gegenüberliegenden zweiten Zentralbohrung deutlich größeren Durchmesser auf. Die zweite Zentralbohrung des Steuerkolbens 27 ist demzufolge als Drosselstelle wirksam.

Zur Weiterleitung des Ölvolumenstroms steht der zweite Druckraum 30 des Volumenstromregelventils 14 über eine Verbindungsleitung 31 und eine Drehdurchführung 32 mit der weiteren Verteilerleitung 15 in Verbindung. Die Drehdurchführung 32 ist aus einem die betreffende Getriebewelle 21 umfassenden, abgedichteten Ringraum 33 eines Gehäusebauteils und mehreren von dem Ringraum 33 zu der axialen Zentralbohrung 15 führenden Radialbohrungen 34 der Getriebewelle 16 gebildet.

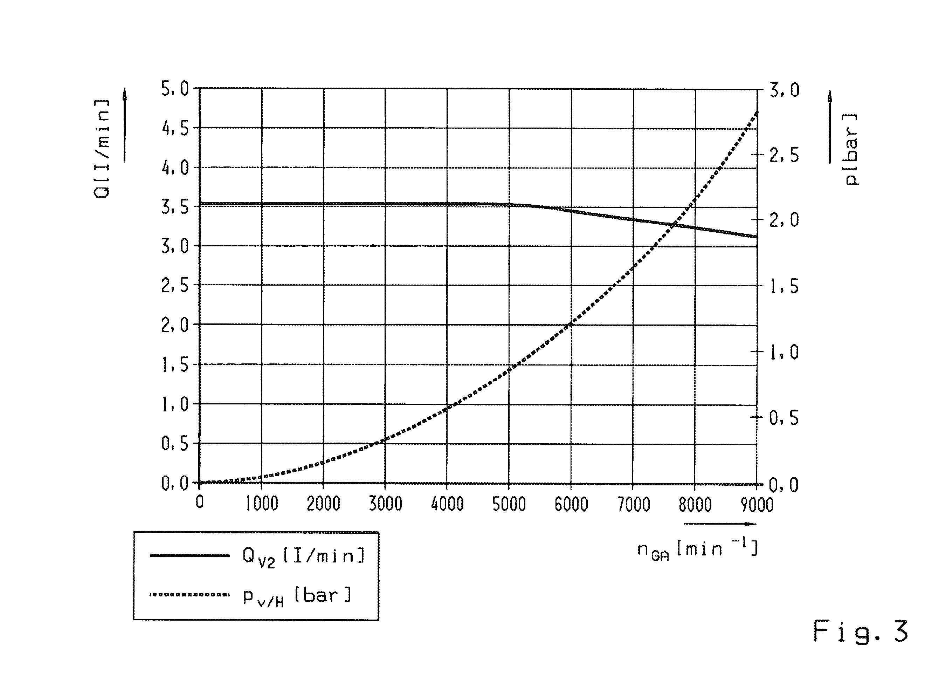

Bei einfachem und kostengünstigen Aufbau entspricht die Funktionsweise des Volumenstromregelventils 14 der Anforderung, den in die weitere Verteilerleitung 15 fließenden Ölvolumenstrom Qᵥ₂ unter allen Betriebsbedingungen selbsttätig weitgehend konstant zu halten. Diese Eigenschaft ist in dem Diagramm der Fig. 3 veranschaulicht, in dem der durch das Volumenstromregelventil 14 in die weitere Verteilerleitung 15 strömende Ölvolumenstrom Qᵥ₂ über der Drehzahl n_{GA} der in diesem Anwendungsbeispiel die Ölpumpe 2 antreibenden Ausgangswelle des Schaltgetriebes 20 dargestellt ist. Zusätzlich ist in Fig. 3 der Verlauf des mit der Drehzahl n_{GA} der Ölpumpe 2 bzw. der Ausgangswelle quadratisch ansteigenden Staudruckes p_{V/H} abgebildet, der in der Hauptdruckleitung 5, in dem Verteiler 26 und in dem ersten Druckraum 29 des Volumenstromregelventils 14 wirksam ist. Aus Fig. 3 ist ersichtlich, dass der druckgeregelte Ölvolumenstrom Qᵥ₂ bis zu einer Drehzahl n_{GA} von etwa 6000 min⁻¹ nahezu konstant bei etwa 3,5 l/min gehalten wird. Bei höheren Drehzahlen n_{GA} ist aufgrund der hohen Fliehkräfte, die in der Drehdurchführung 32 auftreten, ein leichter Rückgang des Ölvolumenstroms Qᵥ₂ zu verzeichnen.

Durch die erfindungsgemäße Ölversorgungseinrichtung 1, 1' wird mit relativ geringem Aufwand erreicht, dass schmier- und kühlungsrelevante Stellen bzw. Getriebebauteile geringer Priorität, wie vorliegend die Wälzlager der Losräder 22a bis 22d, ausreichend mit Schmier- und Kühlöl versorgt werden, ohne den zu den schmier- und kühlungsrelevanten Stellen bzw. Getriebebauteilen hoher Priorität, wie vorliegend den Zahneingriffen der Zahnradpaare 22a, 23a; 22b, 23b, geleiteten Ölvolumenstrom kritisch einzuschränken. Dies ist neben dem konstruktiven Aufbau der Ölversorgungseinrichtung 1, 1' insbesondere der Anordnung und Ausbildung des Volumenstromregelventils 14 zu verdanken.

### Bezugszeichen

- 1: Ölversorgungseinrichtung
- 1': Ölversorgungseinrichtung
- 2: Ölpumpe
- 3: Saugleitung
- 4: Vorratsbehälter, Ölsumpf
- 5: Hauptdruckleitung
- 6: Drosselstelle
- 7: Verteilerleitung
- 8a: Anschlussleitung
- 8b: Anschlussleitung
- 9a: Spritzdüse
- 9b: Spritzdüse
- 10: Drosselstelle
- 11: Verteilerleitung
- 12a: Anschlussleitung
- 12b: Anschlussleitung
- 12c: Anschlussleitung
- 12d: Anschlussleitung
- 12e: Anschlussleitung
- 13a: Spritzdüse
- 13b: Spritzdüse
- 13c: Spritzdüse
- 13d: Spritzdüse
- 13e: Spritzdüse
- 14: Volumenstromregelventil
- 15: Weitere Verteilerleitung
- 16: Getriebewelle
- 17a: Radialbohrung
- 17b: Radialbohrung
- 17c: Radialbohrung
- 17d: Radialbohrung
- 18a: Ringförmiges Getriebebauteil
- 18b: Ringförmiges Getriebebauteil
- 18c: Ringförmiges Getriebebauteil
- 18d: Ringförmiges Getriebebauteil
- 19: Rückstellfeder
- 20: Schaltgetriebe
- 21: Getriebewelle
- 22a: Festrad
- 22b: Festrad
- 22c: Festrad
- 22d: Festrad
- 23a: Losrad
- 23b: Losrad
- 23c: Losrad
- 23d: Losrad
- 24a: Gangradsatz
- 24b: Gangradsatz
- 24c: Gangradsatz
- 24d: Gangradsatz
- 25a: Gangkupplung
- 25b: Gangkupplung
- 25c: Gangkupplung
- 25d: Gangkupplung
- 26: Verteiler
- 27: Steuerkolben
- 28: Ventilgehäuse
- 29: Erster Druckraum
- 30: Zweiter Druckraum
- 31: Verbindungsleitung
- 32: Drehdurchführung
- 33: Ringraum
- 34: Radialbohrung
- n_{GA}: Drehzahl der Ausgangswelle
- p_{v/H}: Staudruck in der Hauptdruckleitung
- p_{s/H}: Statischer Druck in der Hauptdruckleitung
- p_{s/V2}: Statischer Druck in Verteilerleitung 15
- p_{t/H}: Gesamtdruck in der Hauptdruckleitung
- Q_{V2}: Ölvolumenstrom in Verteilerleitung 15

## Patentansprüche

1. Ölversorgungseinrichtung eines Schaltgetriebes, das mindestens zwei achsparallele Getriebewellen (16, 21) aufweist, die selektiv über mehrere jeweils ein Festrad (22) und ein Losrad (23) umfassende Gangradsätze (24) mit unterschiedlicher Übersetzung mittels den Losrädern (23) zugeordneten Gangkupplungen (25) miteinander in Triebverbindung bringbar sind, mit einer Ölpumpe (2), mittels der Getriebeöl aus einem Vorratsbehälter (4) in eine Hauptdruckleitung (5) förderbar ist, und mit mindestens einer an die Hauptdruckleitung (5) angeschlossenen Verteilerleitung (7, 11), über die Getriebeöl an mehrere, jeweils auf eine schmier- und/oder kühlungsrelevante Stelle eines Getriebebauteils (22, 23) gerichtete Spritzdüsen (9, 13) leitbar ist, **dadurch gekennzeichnet, dass** mindestens eine weitere Verteilerleitung (15) an die Hauptdruckleitung (5) angeschlossen ist, dass die weitere Verteilerleitung (15) als eine in einer Getriebewelle (16) angeordnete axiale Zentralbohrung ausgebildet ist, von der mindestens eine Radialbohrung (17) zu einem die Getriebewelle (16) ringförmig umgebenden schmierungs- und/oder kühlungsrelevanten Getriebebauteil (18) führt, und dass die weitere Verteilerleitung (15) über ein Volumenstromregelventil (14) mit der Hauptdruckleitung (5) in Verbindung steht, mittels dem der in die weitere Verteilerleitung (15) geleitete Ölvolumenstrom (Q_{V2}) unabhängig von dem Fördervolumenstrom und dem Förderdruck der Ölpumpe (2) weitgehend konstant haltbar ist.

2. Ölversorgungseinrichtung nach Anspruch 1, **dadurch gekennzeichnet, dass** das Volumenstromregelventil (14) als ein druckgesteuertes Proportionalventil mit einer mittels eines Steuerkolbens (27) steuerbaren, die Hauptdruckleitung (5) mit der weiteren Verteilerleitung (15) verbindenden Durchflussöffnung ausgebildet ist, wobei der Steuerkolben (27) in einem die Durchflussöffnung erweiternden Sinn von einer Rückstellfeder (19) und von dem in der weiteren Verteilerleitung (15) herrschenden statischen Druck (p_{s/V2}) beaufschlagbar ist, sowie dazu entgegengesetzt in einem die Durchflussöffnung verengenden Sinn von dem in der Hauptdruckleitung (5) herrschenden Gesamtdruck (p_{t/H}) belastbar ist.

3. Ölversorgungseinrichtung nach Anspruch 2, **dadurch gekennzeichnet, dass** der Steuerkolben (27) des Volumenstromregelventils (14) zylindrisch ausgebildet und axialbeweglich in einer zylindrischen Bohrung eines Ventilgehäuses (28) geführt ist, dass der Steuerkolben (27) mit einer ersten stirnseitigen Wiegefläche einen von dem Gesamtdruck (p_{t/H}) der Hauptdruckleitung (5) beaufschlagten ersten Druckraum (29) begrenzt, dass der Steuerkolben (27) mit einer axial gegenüberliegenden und von der Rückstellfeder (19) belasteten zweiten stirnseitigen Wiegefläche einen von dem statischen Druck (p_{s/V2}) der weiteren Verteilerleitung (15) beaufschlagten zweiten Druckraum begrenzt, wobei die steuerbare Durchflussöffnung durch eine in dem Zylindermantel des Steuerkolbens (27) angeordnete Ringnut und eine radial benachbart in dem Ventilgehäuse (28) angeordnete, mit der Hauptdruckleitung (5) in Verbindung stehende Radialbohrung gebildet ist, dass in dem Steuerkolben (27) mindestens eine Radialbohrung von der Ringnut in die Mitte des Steuerkolbens (27) führt, von der eine erste axiale Zentralbohrung zu dem ersten Druckraum (29) und eine zweite axiale Zentralbohrung zu dem zweiten Druckraum (30) führt, und dass der zweite Druckraum (30) mit der weiteren Verteilerleitung (15) verbunden ist.

4. Ölversorgungseinrichtung nach Anspruch 3, **dadurch gekennzeichnet, dass** die erste Zentralbohrung des Steuerkolbens (27) einen gegenüber der zweiten Zentralbohrung deutlich größeren Durchmesser aufweist.

5. Ölversorgungseinrichtung nach einem der Ansprüche 1 bis 4, **dadurch gekennzeichnet, dass** eine an den zweiten Druckraum (30) des Volumenstromregelventils (14) angeschlossene Verbindungsleitung (31) mit der weiteren Verteilerleitung (15) über eine Drehdurchführung (32) in Verbindung steht.

6. Ölversorgungseinrichtung nach Anspruch 5, **dadurch gekennzeichnet, dass** die Drehdurchführung (32) aus einem die betreffende Getriebewelle (16) radial umfassenden abgedichteten Ringraum (33) eines Gehäusebauteils und mindestens einer von dem Ringraum (33) zu der axialen Zentralbohrung führenden Radialbohrung (34) in der Getriebewelle (16) gebildet ist.

7. Ölversorgungseinrichtung nach einem der Ansprüche 1 bis 6, **dadurch gekennzeichnet, dass** die weitere Verteilerleitung (15) in einer von dem Ölsumpf (4) entfernten Getriebewelle (16) angeordnet ist, und dass mindestens eine Radialbohrung (17) von der weiteren Verteilerleitung (15) zu einem Lager der betreffenden Getriebewelle (16) führt.

8. Ölversorgungseinrichtung nach einem der Ansprüche 1 bis 7, **dadurch gekennzeichnet, dass** die weitere Verteilerleitung (15) in einer mehrere Losräder (23) tragenden Getriebewelle (16) angeordnet ist, und dass mindestens eine Radialbohrung (17) von der weiteren Verteilerleitung (15) zu einem Lager und/oder einer Schaltmuffe und/oder einem Reibsynchronisierelement und/oder einer Gangkupplung eines der betreffenden Losräder (23) führt.

## Claims

1. Oil supply device of a manual transmission which has at least two axially parallel transmission shafts (16, 21) which can selectively be placed in driving connection with one another, via a plurality of gearwheel sets (24) comprising in each case one fixed wheel (22) and one loose wheel (23) and of different transmission ratio, by means of gear clutches (25) assigned to the loose wheels (23), having an oil pump (2) by means of which transmission oil can be fed from a storage tank (4) into a main pressure line (5), and having at least one distributor line (7, 11) which is connected to the main pressure line (5) and via which transmission oil can be conducted to a plurality of spray nozzles (9, 13) which are directed towards in each case one point, which is relevant with regard to lubrication and/or cooling, of a transmission component (22, 23), **characterized in that** at least one further distributor line (15) is connected to the main pressure line (5), **in that** the further distributor line (15) is designed as an axial central bore which is arranged in a transmission shaft (16) and from which at least one radial bore (17) leads to a transmission component (18), which is relevant with regard to lubrication and/or cooling, annularly surrounding the transmission shaft (16), and **in that** the further distributor line (15) is connected to the main pressure line (5) via a volume flow regulating valve (14), by means of which the oil volume flow (Q_{V2}) conducted into the further distributor line (15) can be kept substantially constant independently of the feed volume flow and the feed pressure of the oil pump (2).

2. Oil supply device according to Claim 1, **characterized in that** the volume flow regulating valve (14) is designed as a pressure-controlled proportional valve having a throughflow opening which can be controlled by means of a control piston (27) and which connects the main pressure line (5) to the further distributor line (15), with it being possible for the control piston (27) to be acted on in a direction for increasing the size of the throughflow opening by a restoring spring (19) and by the static pressure (p_{s/V2}) prevailing in the further distributor line (15), and to be loaded oppositely, in a direction for reducing the size of the throughflow opening, by the total pressure (p_{t/H}) prevailing in the main pressure line (5).

3. Oil supply device according to Claim 2, **characterized in that** the control piston (27) of the volume flow regulating valve (14) is of cylindrical design and is guided in an axially movable manner in a cylindrical bore of a valve housing (28), **in that** the control piston (27), by means of a first end-side balance surface, delimits a first pressure chamber (29) acted on by the total pressure (p_{t/H}) of the main pressure line (5), **in that** the control piston (27), by means of an axially opposite second end-side balance surface loaded by the restoring spring (19), delimits a second pressure chamber which is acted on by the static pressure (p_{s/V2}) of the further distributor line (15), with the controllable throughflow opening being formed by an annular groove arranged in the cylinder barrel of the control piston (27) and by a radial bore which is arranged radially adjacently in the valve housing (28) and which is connected to the main pressure line (5), **in that**, in the control piston (27), at least one radial bore leads from the annular groove into the centre of the control piston (27), from which a first axial central bore leads to the first pressure chamber (29) and a second axial central bore leads to the second pressure chamber (30), and **in that** the second pressure chamber (30) is connected to the further distributor line (15).

4. Oil supply device according to Claim 3, **characterized in that** the first central bore of the control piston (27) has a diameter which is considerably greater than that of the second central bore.

5. Oil supply device according to one of Claims 1 to 4, **characterized in that** a connecting line (31) connected to the second pressure chamber (30) of the volume flow regulating valve (14) is connected via a rotary leadthrough (32) to the further distributor line (15).

6. Oil supply device according to Claim 5, **characterized in that** the rotary leadthrough (32) is formed from a sealed annular chamber (33), which radially surrounds the respective transmission shaft (16), of a housing component, and from at least one radial bore (34), which leads from the annular chamber (33) to the axial central bore, in the transmission shaft (16).

7. Oil supply device according to one of Claims 1 to 6, **characterized in that** the further distributor line (15) is arranged in a transmission shaft (16) which is remote from the oil sump (4), and **in that** at least one radial bore (17) leads from the further distributor line (15) to a bearing of the respective transmission shaft (16).

8. Oil supply device according to one of Claims 1 to 7, **characterized in that** the further distributor line (15) is arranged in a transmission shaft (16) which supports a plurality of loose wheels (23), and **in that** at least one radial bore (17) leads from the further distributor line (15) to a bearing and/or a shift sleeve and/or a friction synchronizing element and/or a gear clutch of one of the respective loose wheels (23).

## Revendications

1. Dispositif d'alimentation en huile d'une boîte de vitesses, qui présente au moins deux arbres de transmission d'axes parallèles (16, 21), qui peuvent être amenés de manière sélective en liaison d'entraînement l'un avec l'autre par le biais de plusieurs jeux de pignons de vitesse (24) comprenant à chaque fois un pignon fixe (22) et un pignon fou (23), avec un rapport de transmission différent au moyen d'embrayages de vitesses (25) associés aux pignons fous (23), avec une pompe à huile (2) au moyen de laquelle de l'huile de transmission peut être refoulée hors d'un réservoir (4) dans une conduite de pression principale (5), et avec au moins une conduite de distribution (7, 11) raccordée à la conduite de pression principale (5), par le biais de laquelle de l'huile de transmission peut être guidée vers plusieurs buses d'injection (9, 13) orientées à chaque fois vers un endroit d'un composant de la transmission (22, 23) pertinent du point de vue de la lubrification et/ou du refroidissement, **caractérisé en ce qu'**au moins une conduite de distribution supplémentaire (15) est raccordée à la conduite de pression principale (5), **en ce que** la conduite de distribution supplémentaire (15) est réalisée sous forme d'un alésage central axial disposé dans un arbre de transmission (16), duquel au moins un alésage radial (17) conduit à un composant de la transmission (18) pertinent du point de vue de la lubrification et/ou du refroidissement entourant sous forme annulaire l'arbre de transmission (16), et **en ce que** la conduite de distribution supplémentaire (15) est en liaison par le biais d'une soupape de régulation du débit (14) avec la conduite de pression principale (5), au moyen de laquelle le débit d'huile (Qᵥ₂) guidé dans la conduite de distribution supplémentaire (15) peut être maintenu essentiellement constant indépendamment du débit de refoulement et de la pression de refoulement de la pompe à huile (2).

2. Dispositif d'alimentation en huile selon la revendication 1, **caractérisé en ce que** la soupape de régulation du débit (14) est réalisée sous forme de soupape proportionnelle à commande de pression avec une ouverture de passage commandable au moyen d'un piston de commande (27), reliant la conduite de pression principale (5) à la conduite de distribution supplémentaire (15), le piston de commande (27) pouvant être sollicité dans le sens d'un élargissement de l'ouverture de passage par un ressort de rappel (19) et par la pression statique (p_{s/V2}) régnant dans la conduite de distribution supplémentaire (15), et pouvant aussi être contraint en sens inverse dans le sens d'un rétrécissement de l'ouverture de passage par la pression totale (p_{t/H}) régnant dans la conduite de pression principale (5).

3. Dispositif d'alimentation en huile selon la revendication 2, **caractérisé en ce que** le piston de commande (27) de la soupape de régulation du débit (14) est réalisé sous forme cylindrique et est guidé de manière déplaçable axialement dans un alésage cylindrique d'un boîtier de soupape (28), **en ce que** le piston de commande (27) limite, avec une première surface d'équilibrage du côté frontal, un premier espace de pression (29) sollicité par la pression totale (p_{t/H}) de la conduite de pression principale (5), **en ce que** le piston de commande (27) limite, avec une deuxième surface d'équilibrage du côté frontal, opposée axialement et contrainte par le ressort de rappel (19), un deuxième espace de pression sollicité par la pression statique (p_{s/V2}) de la conduite de distribution supplémentaire (15), l'ouverture de passage commandable étant formée par une rainure annulaire disposée dans l'enveloppe cylindrique du piston de commande (27), et un alésage radial en liaison avec la conduite de pression principale (5), disposé radialement en position adjacente dans le boîtier de soupape (28), **en ce qu'**au moins un alésage radial dans le piston de commande (27) conduit de la rainure annulaire jusqu'au centre du piston de commande (27), duquel un premier alésage axial central conduit au premier espace de pression (29) et un deuxième alésage axial central conduit au deuxième espace de pression (30), et **en ce que** le deuxième espace de pression (30) est connecté à la conduite de distribution supplémentaire (15).

4. Dispositif d'alimentation en huile selon la revendication 3, **caractérisé en ce que** le premier alésage central du piston de commande (27) présente un diamètre nettement plus grand que le deuxième alésage central.

5. Dispositif d'alimentation en huile selon l'une quelconque des revendications 1 à 4, **caractérisé en ce qu'**une conduite de connexion (31) raccordée au deuxième espace de pression (30) de la soupape de régulation du débit (14) est en liaison avec la conduite de distribution supplémentaire (15) par le biais d'un passage rotatif (32).

6. Dispositif d'alimentation en huile selon la revendication 5, **caractérisé en ce que** le passage rotatif (32) est formé d'un espace annulaire (33) étanché d'un composant de boîtier entourant radialement l'arbre de transmission concerné (16), et d'au moins un alésage radial (34) dans l'arbre de transmission (16), conduisant de l'espace annulaire (33) à l'alésage axial central.

7. Dispositif d'alimentation en huile selon l'une quelconque des revendications 1 à 6, **caractérisé en ce que** la conduite de distribution supplémentaire (15) est disposée dans un arbre de transmission (16) éloigné du carter d'huile (4), et **en ce qu'**au moins un alésage radial (17) conduit de la conduite de distribution supplémentaire (15) à un palier de l'arbre de transmission concerné (16).

8. Dispositif d'alimentation en huile selon l'une quelconque des revendications 1 à 7, **caractérisé en ce que** la conduite de distribution supplémentaire (15) est disposée dans un arbre de transmission (16) portant plusieurs pignons fous (23), et **en ce qu'**au moins un alésage radial (17) conduit de la conduite de distribution supplémentaire (15) à un palier et/ou un manchon coulissant et/ou un élément de synchronisation à friction et/ou un embrayage de vitesses de l'un des pignons fous (23) concernés.
